# EUROPEAN PATENT SPECIFICATION

(11) **EP 2 285 019 B1**
(45) Date of publication and mention of the grant of the patent: **26.02.2014**
(21) Application number: 09741712.5
(22) Date of filing: 05.05.2009
(51) Int. Cl.: H04J 14/02, H04B 10/2587, H04B 10/29

(54) **OPTICAL COMMUNICATION SYSTEM, APPARATUS AND METHOD**
OPTISCHES KOMMUNIKATIONSSYSTEM, GERÄT UND VERFAHREN
SYSTÈME, APPAREIL ET PROCÉDÉ DE COMMUNICATION OPTIQUE

(30) Priority: 09.05.2008 CN 200810066992
(43) Date of publication of application: 16.02.2011
(73) Proprietor: Huawei Technologies Co., Ltd., Longgang District, Shenzhen Guangdong 518129 (CN)
(72) Inventor: LIN, Huafeng, Shenzhen (CN); ZHAO, Jun, Shenzhen (CN); XU, Zhiguang, Shenzhen (CN)
(74) Representative: Kreuz, Georg Maria
(86) International application number: PCT/CN2009/071651
(87) International publication number: WO 2009/135437

(56) References cited:
- EP-A2- 0 910 187
- EP-A2- 1 418 691
- WO-A1-2007/141547
- CA-A1- 2 291 837
- CN-A- 1 491 502
- CN-A- 101 034 941
- CN-A- 101 119 163
- CN-A- 101 141 346
- US-A- 5 408 350
- US-A1- 2006 115 269

## Description

This application claims priority to Chinese Patent Application No. CN200810066992.2, filed with the Chinese Patent Office on May 9, 2008 and entitled "Optical Communication System, Apparatus, and Method".

### Field of the Invention

The present invention relates to the field of optical network communications technologies, and in particular, to an optical communication system, apparatus, and method.

### Background of the Invention

On traditional copper-wire-based broadband access networks, the copper wire infrastructures are gradually aging and a large number of copper wires need to be replaced and updated, and this increases operation & maintenance costs year by year. On the one hand, with the increasing bandwidth requirements of users, copper-wire-based broadband access technologies such as Asymmetrical Digital Subscriber Line (ADSL), Very high rate DSL (VDSL), Very high rate DSL 2 (VDSL2), and VDSL 2+ can only provide bandwidths that are inversely proportional to the transmission distances. That is, the larger the bandwidth is, the shorter the effective transmission distance is. On the other hand, although wireless broadband access networks such as a Worldwide interoperability for Microwave Access (WiMAX) network is inferior to wired access networks in terms of bandwidths, the wireless broadband access networks pose huge threats by virtue of wireless media resources characterized by seamless penetration, low little noise interference, and huge bandwidth resources. Compared with the copper wire broadband access networks, the fiber passive broadband access networks have a wider coverage range. Traditional passive optical networks can cover a distance of 20 km, while the copper wire broadband access networks generally cover a distance of 3 km at most. To further decrease the quantity of central equipment rooms and reduce the operation & maintenance costs, the research on the Long Reach PON (LR-PON) draws extensive attention. The transmission distance of the LR-PON may be much longer than the distance covered by the traditional PON, with the transmission distance greater than 20 km.

EP 0 910 187 relates to a coherent optical system for solving the technical problem that determining, creating and locking a local oscillator frequency is difficult and costly to implement. The coherent optical system includes an optical source for producing a downstream optical signal to be received at a downstream destination with a portion of said downstream optical signal being used to produce an upstream optical signal on an optical fiber; an optical coupler coupled to said optical fiber for combining said upstream optical signal and a local oscillator optical signal and producing a combined optical signal; and a coherent receiver coupled to said optical coupler for receiving and processing said combined optical signal to retrieve information modulated on said upstream optical signal.

### Summary of the Invention

The present invention provides an optical communication system, apparatus, and method. With the solution according to the present invention, relay transmission of optical signals can be provided, and the transmission distance of the optical communication system can be increased. This saves optical sources and facilitates the system expansion.

According to the first aspect of the present invention an optical communication system includes at least one relay, where one end of the relay is coupled to at least one terminal node and the other end is coupled to a central node to implement bi-directional communications between the terminal node and the central node. The relay is configured to receive a first optical signal from the terminal node and a second optical signal from the central node. The relay restores a data electrical signal from the first optical signal, modulates the data electrical signal to at least some optical signals of the second optical signal, and sends a third optical signal obtained through modulation to the central node.

According to the second aspect of the present invention a communication apparatus is configured to receive a first optical signal from a first node and a second optical signal from a second node. The communication apparatus includes a receiving modulates the data electrical signal to at least some optical signals of the second optical signal, and sends a third optical signal obtained through modulation to the central node.

According to the second aspect of the present invention a communication apparatus is configured to receive a first optical signal from a first node and a second optical signal from a second node. The communication apparatus includes a receiving module and a modulating module, where the receiving module is configured to restore a data electrical signal from the first optical signal sent from the first node and send the data electrical signal to the modulating module; and the modulating module is configured to modulate the data electrical signal to at least some optical signals of the second optical signal, and send a third optical signal obtained through modulation to the second node.

According to the third aspect of the present invention an optical transmission method includes: receiving a first optical signal from a first node and a second optical signal from a second node, where the second optical signal includes a fourth optical signal and a fifth optical signal; sending the fourth optical signal to the first node; restoring a data electrical signal from the first optical signal, modulating the restored data electrical signal to the fifth optical signal, and sending a third optical signal obtained through modulation to the second node.

With the technical solution according to the present invention, the relay does not need upstream optical sources, and this saves optical sources and makes the wavelength allocation more flexible.

### Brief Description of the Drawings

FIG. 1A, FIG. 1B, and FIG. 1C illustrate an access system according to an embodiment of the present invention;
FIG. 2 illustrates a configuration of wavelengths of a trunk section according to an embodiment of the present invention;
FIG. 3 illustrates an integrated access system according to an embodiment of the present invention;
FIG. 4A to FIG. 4G illustrate a relay according to an embodiment of the present invention;
FIG. 5A and FIG. 5B illustrate a relay according to an embodiment of the present invention; and
FIG. 6A to FIG. 6D illustrate a local node according to an embodiment of the present invention.

### Detailed Description of the Embodiments

To make the technical solution, objectives and merits of the present invention clearer, the embodiments of the present invention are hereinafter described in detail with reference to the accompanying drawings.

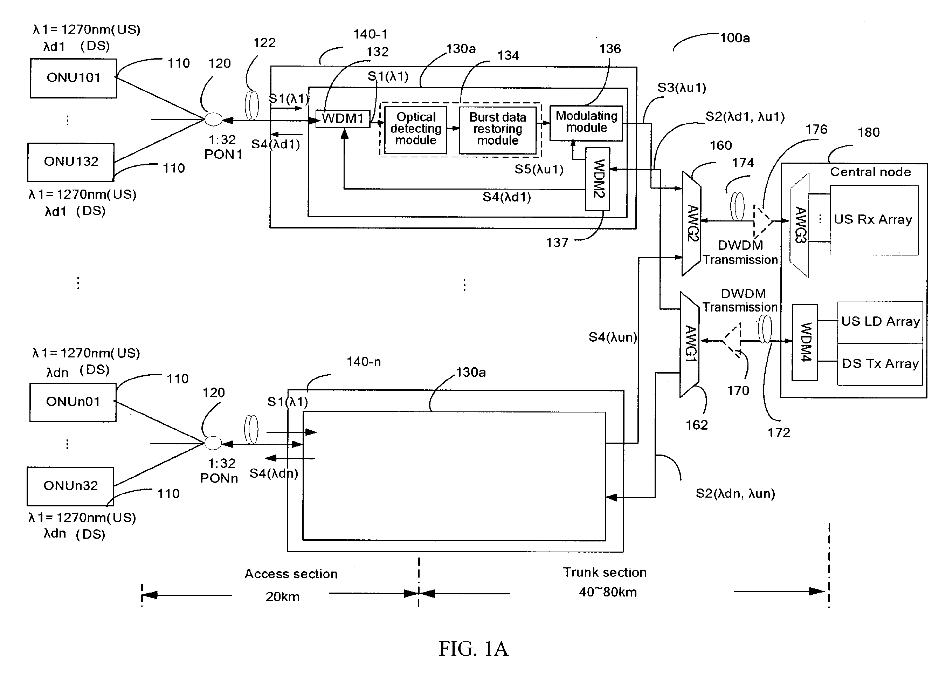

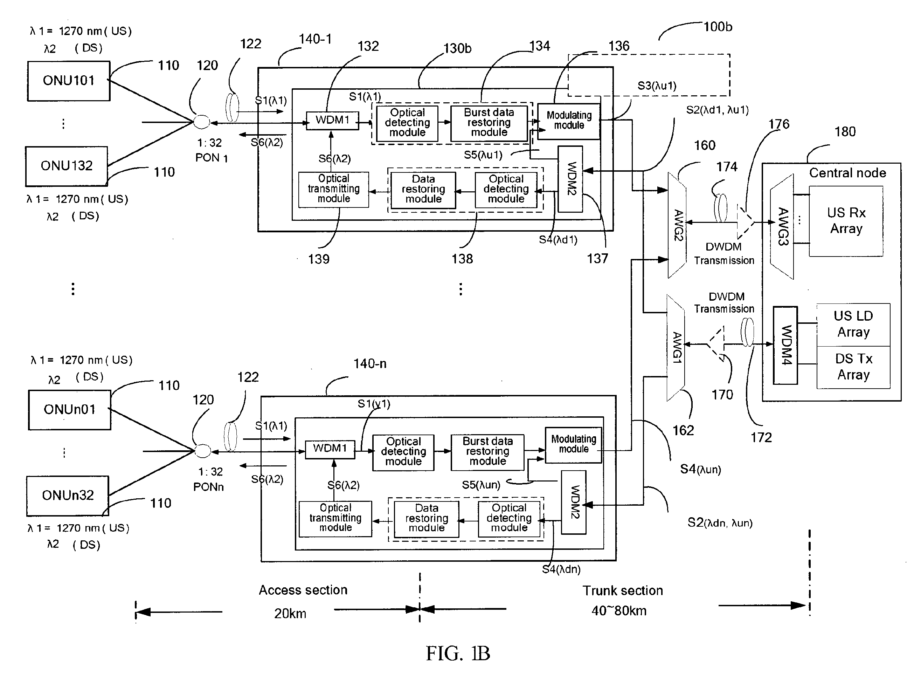

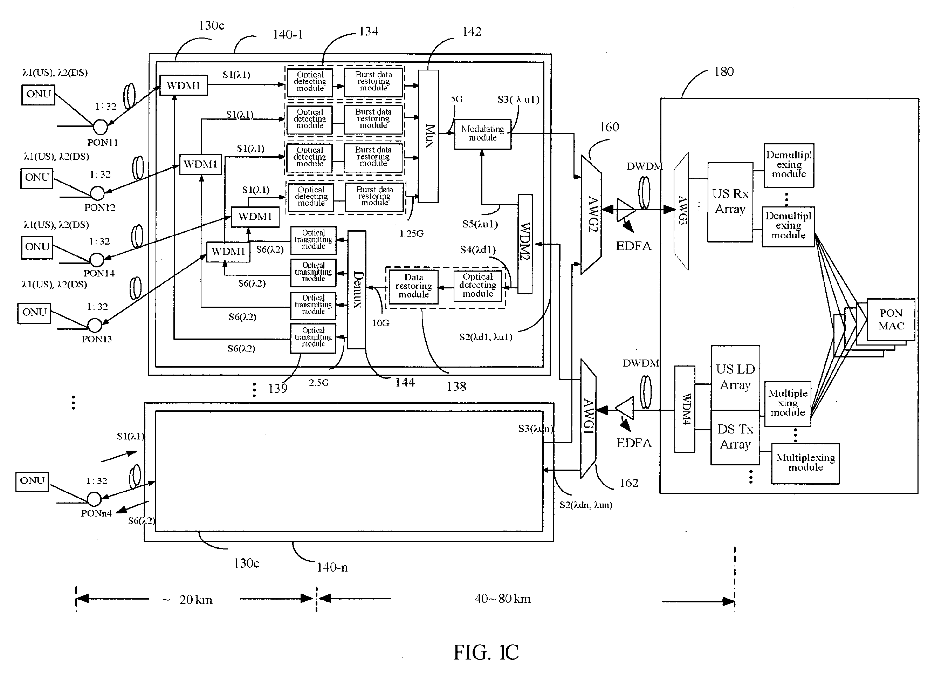

FIG. 1A, FIG. 1B, and FIG. 1C illustrate a communication system according to an embodiment of the present invention. As shown in FIG. 1A, the communication system 100a includes a terminal node 110, local nodes 140-1, 140-2, ..., 140-n, and a central node 180. The terminal node 110 is a network device located at a terminal user premise, and includes an Optical Network Terminal (ONT) or an Optical Network Unit (ONU). The difference between the ONT and the ONU is as follows: the ONT is located at the user end, while there are other networks, such as an Ethernet, between the ONU and the user. Unless otherwise specified, the ONU is used hereinafter. Local nodes 140-1, 140-2, ..., 140-n are access offices covering partial areas. For example, these local nodes may be set at any one of the following locations with a distance of 10 km to 20 km away from the user equipment: a local equipment room, a local cabinet, a street cabinet, and a switching cabinet. Unless otherwise specified, the local nodes are collectively represented by 140. The central node 180 may be set in the central equipment room (that is, the Metro equipment room). For example, the central node 180 may be set at a location with a distance of about 40 km to 80 km away from the local node 140. The central node 180 acts as an intermediate node between an upper-level network node (not shown in FIG. 1) and the local node. Alternatively, the central node 180 may also be directly connected to the terminal node 110 (not shown in FIG. 1). In addition, the terminal node 110 is connected to the local node 140 through an Optical Distribution Network (ODN) 120, and the local node 140 is connected to the central node 180 through a trunk fiber 172/174. The ODN 120 includes passive optical devices, for example, a fiber, an optical branch component, and an optical filter, and may include multiple cascaded branch components.

FIG. 1A schematically illustrates that the central node 180 (Metro-OLT in FIG. 1A) is connected to n local nodes 140 (140-1, ..., 140-n). As an example, the n local nodes 140 may also be located in an equipment room at the same access office. It is understandable, however, that the locations of local nodes 140-1, ..., 140-n do not affect the implementation of embodiments of the present invention. Each local node provides a user interface connected to the 32 terminal nodes 110 through a PON. For example, when the local node 140-1 in FIG. 1A is connected to the terminal node through the PON 1, the ONU 10, ..., ONU 132 are used; when the local node 140-n is connected to the terminal node through the PON n, the ONU n01, ..., ONU n32 are used. The PON 1, ..., PON n are branch networks including the ODNs, each of which can divide an optical signal from the local node 140 into 32 branches according to optical power, and can combine the optical signals from the ONU n01, ..., ONU n32 into one.

In FIG. 1A, the central node 180 has a downstream transmit array (DS Tx Array) configured to send an optical signal carrying downstream data. Preferably, the central node 180 also has an upstream laser diode array (US LD Array) configured to provide the local node 140 with a seed optical signal. The local node 140 may modulate the upstream data to the seed optical signal provided by the central node 180. Optical signals generated by the DS Tx Array and the US LD Array are multiplexed to the trunk fiber 172 through a Wavelength Division Multiplexer (WDM) 4. The downstream optical signal transmitted on the trunk fiber 172 may include n upstream wavelengths and n downstream wavelengths. Optical signals transmitted on the trunk fiber 172 undergo wavelength demultiplexing through an optical demultiplexer 162, for example, arrayed waveguide grating (AWG) 1. The optical demultiplexer 162 outputs n pairs of optical signals S2 (λd1, λu1), ..., S2 (λdn, λun), where each pair includes two optical signals with different wavelengths. Each pair of optical signals is provided to a local node. The specific wavelength configuration is described hereinafter with reference to embodiments. In this embodiment, the upstream and downstream optical signals between the local node 140 and the central node 180 are carried over different fibers. The seed optical signal (with wavelengths λu1, ..., λun) generated by the US LD Array is transmitted through the trunk fiber 172 together with the downstream optical signal (with wavelengths λd1, ..., λdn) carrying downstream data generated by the DS Tx Array. This may avoid problems such as Rayleigh Back Scattering (RBS) and reflection occurring when the seed optical signal and upstream modulated optical signal are transmitted on the trunk fiber 174 in single fiber duplex mode.

The local node 140-1 receives an optical signal from the optical demultiplexer 162, and divides the received optical signal into two paths of signals through a WDM device 137 (for example, WDM 2). One path of signal is output as the optical signal with the wavelength λd1 (S4 (λd1)) carrying downstream data, and the other path of signal is used as the seed optical signal with the wavelength λu1 (S5 (λu1)). The local node 140-1 transparently transmits the optical signal S4 (λd1) in the optical domain, that is, it does not perform optical/electrical conversion and electrical/optical conversion on the S4 (λd1). The S4 (λd1) is multiplexed by the WDM device 132 (for example, WDM 1) to the PON 1. The optical signal with the wavelength λu1 is input to the modulating module 136 as the upstream seed optical signal on the local node 140-1. If the fiber 122 between the ODN 120 of the PON 1 and the local node 140-1 carries the upstream and downstream optical signals by using two fibers, the WDM device 132 may be omitted, and the downstream optical signal is sent through a corresponding fiber interface.

The PON 1 is similar to a broadcast network, and divides the optical signal sent from the local node 140-1 into 32 branches according to optical power.

The ONU 101, ..., ONU 132 receive optical signals from a branch corresponding to the ODN 120, and receive their own data from the optical signals.

In the upstream direction, when an ONU needs to send data in the upstream direction, the ONU sends an optical signal with the wavelength λ1 in its own timeslot, for example, the wavelength λ1 of 1270 nm. The transmission timeslot of the ONU may be allocated by the central node 180. For details, see the timeslot allocation methods in systems such as the APON, GPON, and EPON.

The ODN 120 multiplexes the upstream optical signals from the ONU 101, ..., ONU 132 to the local node 140-1.

The local node 140-1 receives the optical signal S1 (λ1) from the ONU 101, ..., ONU 132 through the ODN 120, where the S1 (λ1) may include time division multiplexing (TDM) optical signals of 32 ONUs.

The local node 140-1 includes a relay 130a, which is configured to perform optical-to-electrical conversion on the upstream optical signal from the PON 1 and modulate an electrical signal upon the optical-to-electrical conversion to the seed optical signal S5 (λu1) from the central node 180. Because the upstream optical signal in the PON 1 system is a burst signal, the burst receiving module 134 of the relay 130a performs photoelectric detection on the upstream optical signal, restores burst clock data, and outputs an electrical signal to the modulating module 136. Specifically, the optical detecting module in the burst receiving module 134 performs photoelectric detection on the upstream optical signal; the burst data restoring module in the burst receiving module 134 restores the data and outputs the electrical signal. The modulating module 136 modulates the input electrical signal to the seed optical signal with the wavelength λu1 (S5 (λu1)), and obtains an optical signal with the wavelength λu1 (S3 (λu1)). The optical signal S3 (λu1) is input to an optical multiplexer 160, for example, AWG 2. In FIG. 1A, the relay 130a demultiplexes the upstream optical signal sent from the ONU 110 to the burst receiving module 134 through the WDM device 132, and multiplexes the downstream optical signal S4 (λd1) to the PON 1 through the WDM device 132. If two fibers are used between the ODN 120 on the PON 1 and the local node 140 to carry upstream and downstream optical signals, the WDM device 132 is optional, and the upstream optical signal on a corresponding fiber interface may be directly input to the burst receiving module 134.

In addition, although the relay 130a on the local node 140-n and the relay 130a on the local node 140-1 work at different wavelengths in FIG. 1A, both relays may be implemented by using devices with a same configuration. For simple description, the relay 130a on the local node 140-n is not shown in FIG. 1A.

The optical multiplexer 160 multiplexes the upstream optical signals from one or multiple local nodes, for example, local nodes 140-1, ..., 140-n to the trunk fiber 174. The multiplexed upstream optical signals are sent to the central node 180 through the trunk fiber 174. In the system shown in FIG. 1A, the upstream optical signals transmitted on the trunk fiber 174 include n optical signals with wavelengths λu1, ..., λun. The trunk fiber 174 may further include an amplifier configured to amplify n optical signals.
The central node 180 receives upstream optical signals from the trunk fiber 174. Specifically, the central node 180 demultiplexes the optical signals with multiple wavelengths sent from the trunk fiber 174, into n optical signals with wavelengths λu, ..., λun by using an optical demultiplexer, for example, AWG 3, and inputs the n demultiplexed optical signals to an upstream receive array (US Rx Array) for receiving. The optical demultiplexer on the central node 180 and the US Rx Array may be an integrated receiver.

Preferably, in the system shown in FIG. 1A, an optical amplifier 170 may be set on the trunk fiber 172 to amplify downstream optical signals and upstream seed optical signals, and an optical amplifier 176 may also be set on the trunk fiber 174 to amplify upstream optical signals. For example, the optical amplifier 170 may concurrently amplify the downstream optical signals and upstream seed optical signals in multiple channels. The optical amplifiers 170 and 176 may be determined according to the ranges of the upstream and downstream wavelengths. For example, for optical signals in band C and band L, an erbium doped fiber amplifier (EDFA) or a semiconductor optical amplifier (SOA) may be used.

Preferably, the relay 130a in the system shown in FIG. 1A includes one or multiple optical amplifiers, which may amplify at least some optical signals on the relay 130a. Specifically, the optical amplifiers may perform optical power amplification on at least one of the following optical signals: downstream optical signal carrying downstream data and upstream seed optical signal S2 (λd1, λu1), downstream optical signal S4 (λd1) carrying downstream data, upstream seed optical signal S5 (λu1), and modulated optical signal S3 (λu1). The specific implementation is hereinafter described.

FIG. 1B schematically illustrates a communication system according to another embodiment of the present invention. Different from the relay 130a in FIG. 1A, a relay 130b included in a local node 140-1 in FIG. 1B includes an optical receiving module 138 and an optical transmitting module 139. The optical receiving module 138 converts the optical signal S4 (λd1) into an electrical signal, and outputs the electrical signal to the optical transmitting module 139. The optical transmitting module 139 is an optical transmitting device, and is configured to modulate the electrical signal input by the optical receiving module 138 to generate and send an optical signal with another wavelength S6 (λ2). Specifically, the optical receiving module 138 may include an optical detecting module and a data restoring module. Similarly, the optical receiving module 138 may integrate the optical detection and data restoration functions. Other functions of the relay 130a in FIG. 1A may also be applicable to the relay 130b in FIG. 1B, and are not further described. In addition, after the optical signal in the downstream direction of the relay 130b undergoes the wavelength conversion, the downstream wavelength between local nodes 140-1, ..., 140-n and the terminal node 110 may be reused.

FIG. 1C schematically illustrates a communication system according to yet another embodiment of the present invention. Different from the relay 130b in FIG. 1B, a relay 130c included in a local node 140-1 in FIG. 1C provides four user interfaces, with each connected to 32 terminal nodes, and thus the maximum number of users is extended from 32 to 128. In an upstream direction, the relay 130c includes four receiving circuits. Each receiving circuit includes an optical receiving module 134, which is configured to: perform photoelectric detection on the upstream optical signal, restore burst clock data, and output an electrical signal. Four optical receiving modules 134 input the electrical signal to the modulating module through a multiplexing module 142 (that is, the Mux). The multiplexing module 142 multiplexes electrical signals output by the four optical receiving modules into one electrical signal. Similarly, in a downstream direction, the relay 130c includes four transmit channels. That is, the data receiving module 138 is connected to four optical transmitting modules 139 through a demultiplexing module 144 (that is, the Demux). Specifically, the receiving module 138 converts the optical signal S4 (λd1) into an electrical signal. The demultiplexing module 144 demultiplexes the electrical signal from the receiving module 138 into four electrical signals and inputs each electrical signal to an optical transmitting module 139. Each optical transmitting module 139 generates an optical signal S6 (λ2) according to the received electrical signal, and sends the optical signal. Specifically, the optical receiving module 138 may include an optical detecting module and a data restoring module. Similarly, the optical receiving module 138 may integrate the optical detection and data restoration functions. Accordingly, the US Rx Array of the central node 180 outputs the upstream electrical signal of each local node, and demultiplexes the electrical signal into multiple electrical signals through the demultiplexing module (that is, the Demux) and sends these electrical signals to a corresponding PON media access control (MAC) processing module for processing. The number of demultiplexed electrical signals depends on the number of user interfaces provided by the local node or depends on the number of PON MAC processing modules. In the downstream direction, the central node 180 can multiplex the electrical signals of multiple PON MAC processing modules into an electrical signal through the multiplexing module (that is, the Mux), and send the electrical signal through an interface of the DS LD Array. The number of multiplexed signals depends on the number of user interfaces provided by the local node or depends on the number of PON MAC processing modules. Other functions of the relays 130a and 130b in FIG. 1A and FIG. 1B may also be applicable to the relay 130c in FIG. 1C, and are not further described. In addition, the relay 130c may change the low-speed transmission to the high-speed transmission in the upstream direction, for example, combining four 1.25 Gbps upstream signals into one 5 Gbps upstream signal; in the downstream direction, the relay 130c may change the high-speed transmission to the low-speed transmission, for example, changing one 10 Gbps downstream signal to four 2.5 Gpbs downstream signals, thus enabling flexible rate adaptation. The relay 130c may also provide only the upstream rate adaptation or the downstream rate adaptation.

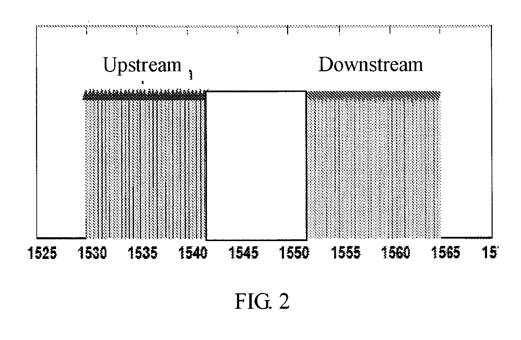

FIG. 2 illustrates configurations of upstream and downstream wavelengths transmitted on the trunk fiber 170 shown in FIG. 1A to FIG. 1C according to an embodiment of the present invention. In communication systems 100a, 100b, and 100c in FIG. 1A, the central node 180 may be a central optical line terminal (OLT) on the next generation PON, that is, an NG-PON OLT. The ONU 101, ..., ONU 132 and ONU n01, ..., ONU n32 are ONUs on the next generation PON, that is, NG-PON ONUs. Band C is divided into an upstream section and a downstream section for DWDM transmission in the wavelength configuration. To save the ports of the optical demultiplexer 162, for example, the ports of the AWG 1, during DWDM wavelength division, an interval between the upstream band and the downstream band may be designed to be an integral multiple of the free spectral range (FSR) of the optical demultiplexer 162, so that the λd1 λd1 and the λu1 are output from the same port and that the λdn and the λun are output from the same port. In this way, the AWG 1 has the same number of ports as the AWG 2. The λd1 and the λu1 may alternatively be designed to be output from different ports. In this way, the number of ports of the AWG 1 is two times that of the AWG 2. At the access section, all the NG-PON ONUs use the same wavelength (for example, 1270 nm) in the upstream direction. In the downstream direction, the NG-PON ONUs receive C-band downstream optical signals from the NG-PON OLT.

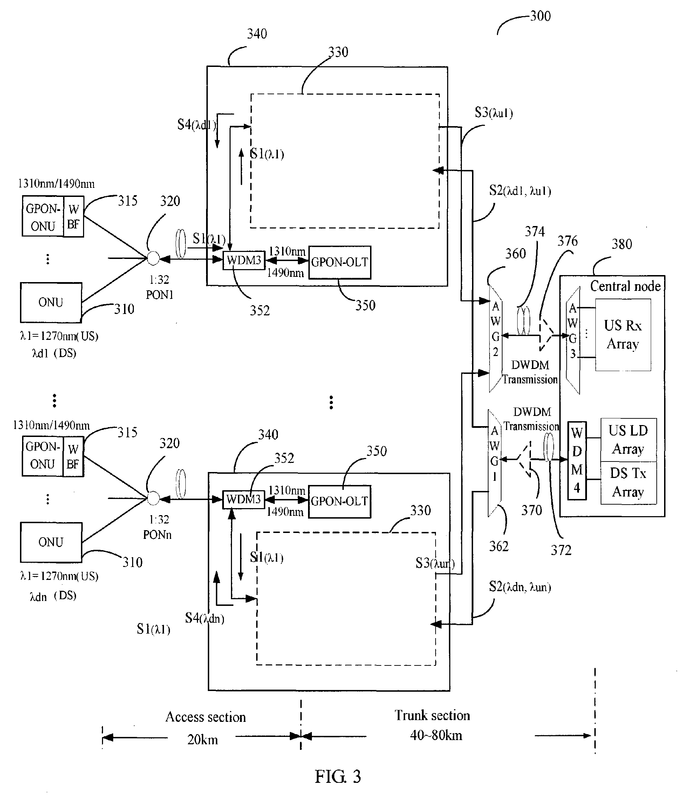

FIG. 3 illustrates another communication system according to another embodiment of the present invention. The communication system integrates a long-distance access system (with the transmission distance of 60 km to 100 km) and a typical optical access system (with the maximum transmission distance of 20 km). As shown in FIG. 3, the communication system 300 includes a terminal node 310, a terminal node 315, a local node 340, and a central node 380. The terminal nodes 310 and 315 are connected to the local node 340 through the ODN 320, and the local node 340 is connected to the central node 380 through a trunk fiber. In the system shown in FIG. 3, the terminal node 310 has functions substantially the same as the terminal node 110 shown in FIG. 1A to FIG. 1C, and the ODN 320 has functions substantially the same as the ODN 120; the relay 330 has functions as the relays 130a, 130b and 130c shown in FIG. 1A to FIG. 1C; the central node 380 has functions substantially the same as the central node 180 shown in FIG. 1A to FIG. 1C; the optical demultiplexer 362 has functions substantially the same as the optical demultiplexer 162 shown in FIG. 1A to FIG. 1C; the optical multiplexer 360 has functions substantially the same as the optical multiplexer 160 shown in FIG. 1A to FIG. 1C; the optical amplifiers 370 and 376 have functions substantially the same as the optical amplifier 170 shown in FIG. 1A to FIG. 1C. For example, the traditional access system shown in FIG. 3 is a GPON system. The terminal node includes a user terminal 315 of the GPON system, for example, the GPON ONU. The local node 340 includes a local OLT 350 corresponding to the GPON system, for example, the GPON-OLT. The system 300 provides a WDM device 352, for example, WDM 3. The WDM device 352 multiplexes the downstream optical signal of the GPON-OLT and the downstream optical signal output by the relay 330 to the PON 1, and demultiplexes the upstream optical signal of the PON 1 into two signals, with one signal provided to the GPON-OLT and the other provided to the relay 330.

The local OLT 350 and the terminal node 315 in the system shown in FIG. 3 may constitute Ethernet-based PON systems other than the GPON system such as an EPON, a Gigabit Ethernet PON (GEPON), and a 10GEPON or Asynchronous Transfer Mode (ATM)-based PON systems such as an ATM PON (APON) and a Broadband PON (BPON).

In the system as shown in FIG. 3, the configuration of wavelengths of the trunk fiber 372 is the same as that of the trunk fiber 172. The trunk fiber 374 is configured to transmit upstream optical signals. At the access section, the ONU 315 uses a standard upstream wavelength of 1310 nm and a downstream wavelength of 1490 nm. All the ONUs 310 use the same wavelength (for example, 1270 nm) in the upstream direction. The ONU 310 belongs to the central node 380. The wavelengths of the optical signals received by the ONU 310 are related to the relay 330. That is, the ONU 310 may receive downstream optical signals transparently transmitted by the relay 330 or downstream optical signals that undergo optical-to-electrical conversion and electrical-to-optical conversion by the relay 330. The ONU 310 and the ONU 315 need to be configured with a wavelength blocking filter (WBF) to block downstream wavelengths that do not belong to the ONU 310 and the ONU 315. In this embodiment, the central node 380 is the Metro-OLT of the NG-PON system, and the ONU310 is the NG-ONU. In FIG. 3, the WBF of the ONU 315 enables the GPON ONU to receive only optical signals with wavelengths ranging from 1480 nm to 1500 nm and block other optical signals, so that the GPON ONU315 is not affected by the newly added NG-PON ONU310. In this way, the GPON and the NG-PON coexist on the same ODN network. Specifically, the WBF may be designed according to the ITU-T G.984.5 standard.

It should be noted that the GPON in the system shown in FIG. 3 may ensure smooth evolution from the GPON to the NG-PON and the seamless integration of the access network and the metropolitan area network (MAN). As shown in FIG. 3, the GPON OLT on the traditional GPON is generally set in an equipment room that is called a local equipment room in this embodiment. Multiple GPON ONUs are connected under the GPON OLT port. If the first user of the GPON OLT requires a bandwidth greater than the bandwidth capacity of the GPON, only the following deployments need to be performed: setting the relay 330 and the WDM 3 (may be deployed earlier during the deployment of the GPON) in the local equipment room where the GPON OLT is located (that is, the equipment room where the local node 340 shown in FIG. 3 is located); deploying the NG-PON OLT at the position where the central node 380 is located; and deploying the AWG 1, the AWG 2 and trunk section fiber between the local node 340 and the central node 380. The optical transmission infrastructures may be earlier deployed. Then, the GPON ONU of the GPON user requiring bandwidth upgrade is replaced with the NG-PON ONU. As a result, the bandwidth of the first GPON user is upgraded. When other GPON users under the same GPON OLT port also want to upgrade the bandwidth, only the NG-PON ONU needs to be replaced with the GPON ONU. When the last GPON ONU under the GPON OLT port is upgraded to the NG-PON, the GPON OLT in the local equipment room may be completely shut down. In this way, the GPON is evolved to the NG-PON smoothly. After all the GPON OLTs are shut down, all the convergence devices are integrated into the central node where the NG-PON OLT is located because only the relays work in the local equipment room. Thus, the local equipment room (that is, the local node 340) may be removed, and all the relays are placed in a local cabinet or a street cabinet. In this way, long-distance seamless integration of the access network and the MAN is realized and the operation & maintenance costs are reduced.

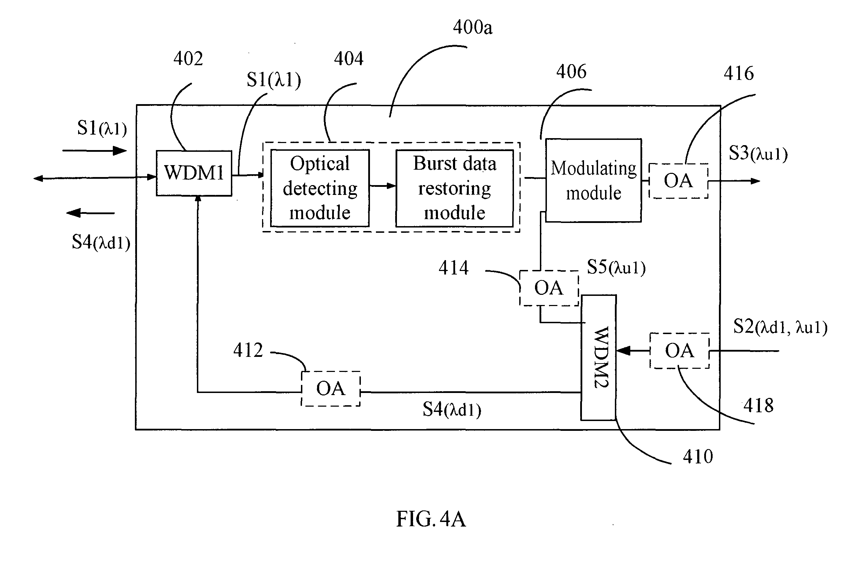

FIG. 4A to FIG. 4G illustrate communication apparatus according to embodiments of the present invention. The apparatus 400a to 400g can provide relay functions between the terminal node 110 and the central node 380 in the system shown in FIG. 1A to FIG. 1C and FIG. 3, and correspond to relays 130a, 130b and 130c and the relay 330.

In FIG. 4A, the apparatus 400a includes at least a burst receiving module 404 and a modulating module 406. The burst receiving module 404 is configured to: perform photoelectric detection on a first optical signal S1 (λ1) from the terminal node, restore burst clock data, and restore a data electrical signal. One end of the modulating module 406 is coupled to the burst receiving module 404 and the other end is coupled to the optical interface interconnected with the central node. The modulating module 406 is configured to: receive a data electrical signal sent from the burst receiving module 404 and an upstream seed optical signal S5 (λu1) sent from the central node, modulate the data electrical signal to the upstream seed optical signal S5 (λu1), and obtain an upstream optical signal S3 (λu1). Preferably, the modulating module 406 is coupled to the optical interface interconnected with the central node through the WDM device 410, and is configured to receive the upstream seed optical signal S5 (λu1) sent from the central node. The WDM device 410 may also demultiplex a downstream optical signal S4 (λd1) carrying downstream data from the optical interface interconnected with the central node, and send the downstream optical signal S4 (λd1) through the PON. Preferably, the relay is configured with a WDM device 402. The WDM device 402 includes three connection ends: a first end is coupled to the burst receiving module 404, a second end is coupled to the WDM device 410, and a third end is coupled to the optical interface interconnected with the PON. The WDM device 402 can multiplex the optical signal output by the WDM device 410 to the optical interface interconnected with the PON, and demultiplex the optical signal of the optical interface interconnected with the PON to the burst receiving module 404. Preferably, the relay can provide channel amplification functions. For example, an optical amplifier 418 is coupled at the input end of the WDM device 410 or an optical amplifier 412 is set between the WDM device 410 and the WDM device 402, or an optical amplifier 414 is set between the WDM device 410 and the modulating module 406, or an optical amplifier 416 is set at the output end of the modulating module, or any combination of the preceding optical amplifiers 412, 414, 416, and 418 is available; or the modulating module 406 may select a modulating module with the amplification function.

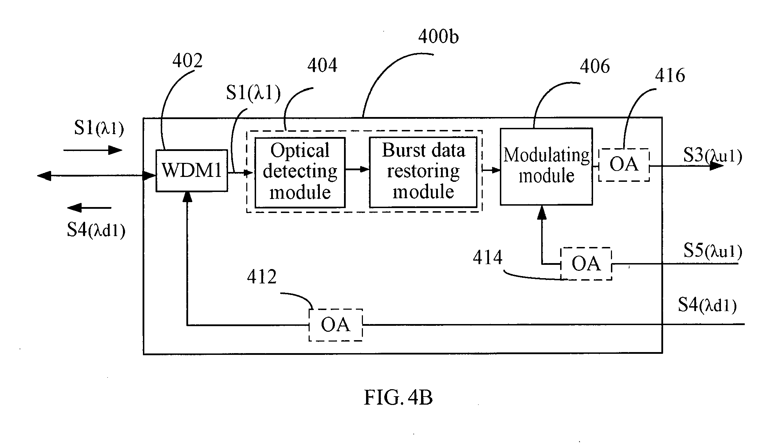

Compared with FIG. 4A, the apparatus 400b in FIG. 4B has two interfaces at the downstream optical signal input end, with each interface corresponding to an optical signal. For example, after the optical signal S4 (λd1) carrying downstream data is input from one of the two interfaces, the optical signal S4 (λd1) is directly coupled to the WDM device 402 or indirectly coupled to the WDM device 402 through the optical amplifier 412. After the upstream seed optical signal S5 (λu1) is input from the other interface, the S5 (λu1) is directly coupled to the modulating module 406 or indirectly coupled to the modulating module 406 through the optical amplifier 414.

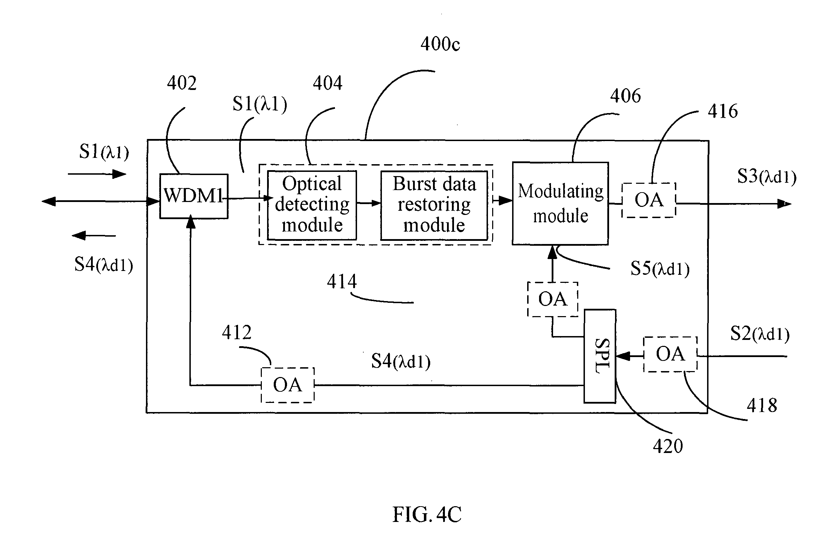

Compared with FIG. 4A, the apparatus 400c in FIG. 4C receives a downstream optical signal including only one wavelength optical signal S2 (λd1) at the downstream optical signal input end. The apparatus 400c includes an optical splitter (SPL) 420 configured to divide the optical signal S2 (λd1) into S4 (λd1) and S5 (λd1) by optical power, where the S4 (λd1) is directly coupled to the WDM device 402 or indirectly coupled to the WDM device 402 through the optical amplifier 412, and the S5 (λd1) is directly coupled to the modulating module 406 or indirectly coupled to the modulating module 406 through the optical amplifier 414. The modulating module 406 outputs an optical signal with the wavelength λd1, that is, S3 (λd1).

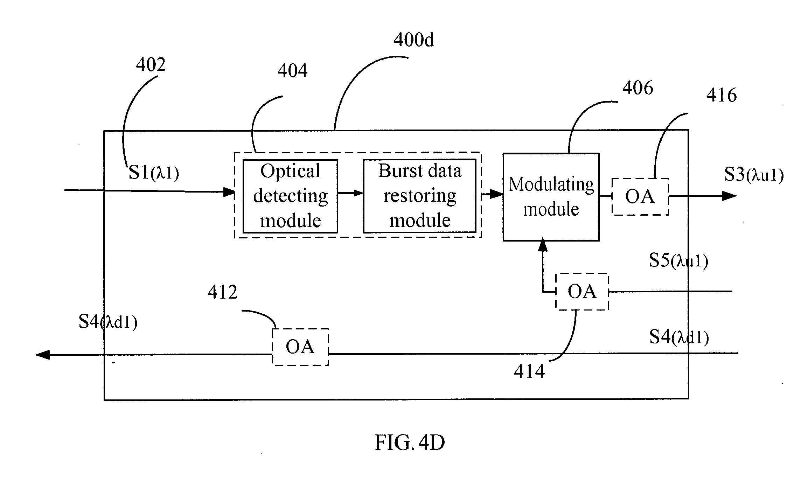

Compared with FIG. 4B, the apparatus 400d in FIG. 4D has a downstream output interface and an upstream input interface. The optical signal S4 (λd1) carrying downstream data may be directly coupled to the downstream output interface of the apparatus 400 directly or indirectly coupled to the downstream output interface through an optical amplifier 412, and the upstream optical signal S1 (λ1) is coupled to the burst receiving module 404 directly through the upstream data interface.

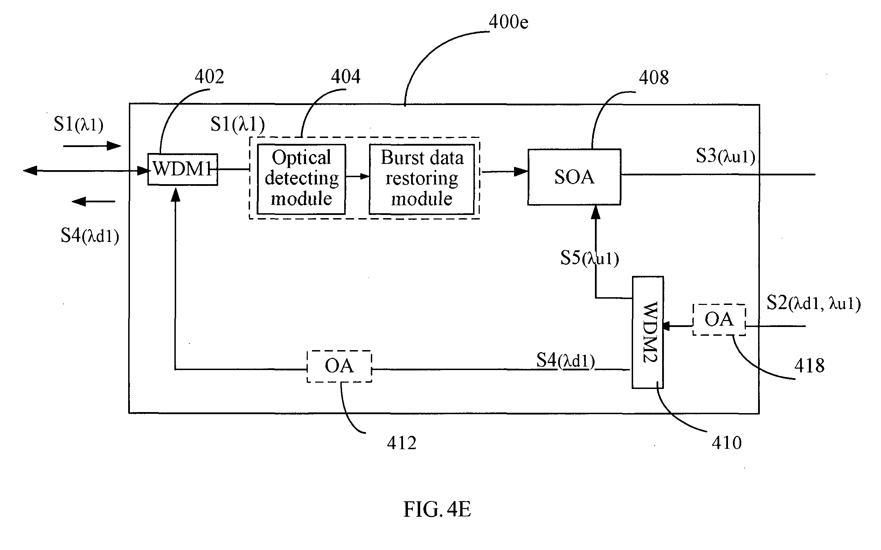

Compared with FIG. 4A, the apparatus 400e in FIG. 4E adopts a modulating module 408 with optical amplification functions, for example, an SOA as shown in FIG. 4E, which can directly perform optical amplification and modulation on the upstream seed optical signal S5 (λu1) concurrently.

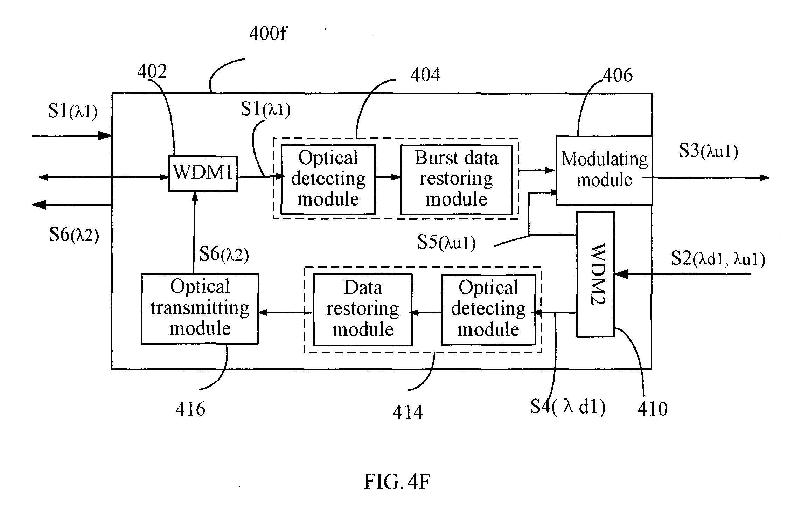

Compared with FIG. 4A, the apparatus 400f in FIG. 4F provides optical-to-electrical conversion and electrical-to-optical conversion functions in the downstream direction. For example, the optical receiving module 414 performs optical detection and data restoration on the optical signal S4 (λd1) and outputs a data electrical signal to the optical transmitting module 416; the optical transmitting module 416 generates an optical signal S6 (λ2) according to the received data electrical signal, and sends the optical signal S6 (λ2). Specifically, the optical receiving module 414 may include an optical detecting module and a data restoring module. Similarly, the optical receiving module 414 may integrate the optical detection and data restoration functions. The optical wavelength in the downstream direction is converted from the λd1 at the input end into the λ2 at the output end, so that the downstream wavelength of the user can be reused.

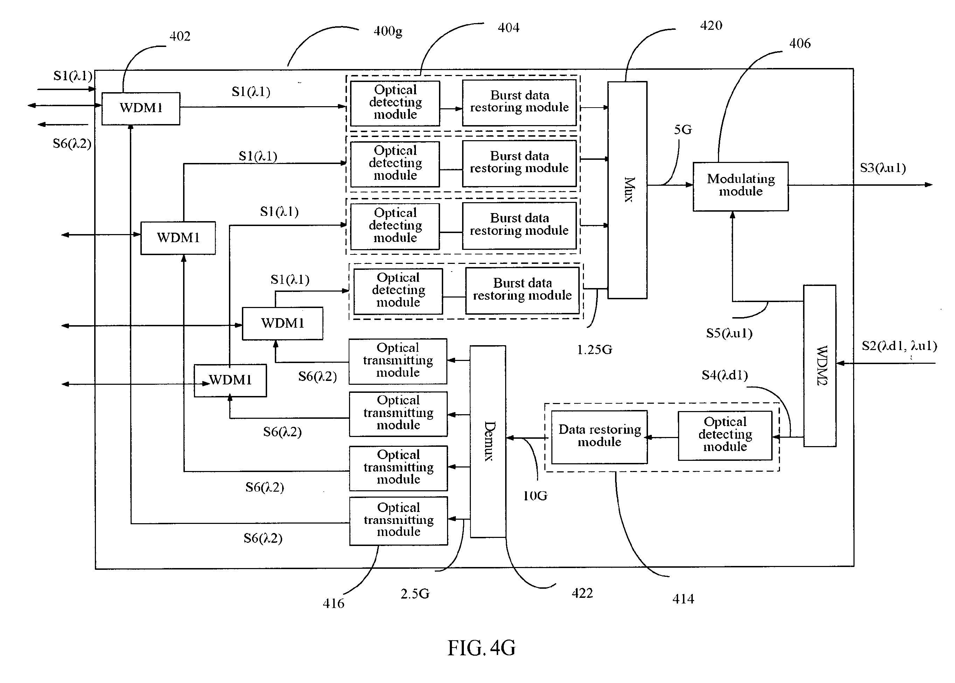

Compared with FIG. 4F, the apparatus 400g in FIG. 4G provides four upstream channels for multiplexing in the upstream direction and four channels for demultiplexing in the downstream direction. Specifically, in the upstream direction, four optical receiving modules 404 are coupled to the modulating module 406 through a multiplexing module 420 (Mux), so that four 1.25 Gbps data electrical signals are multiplexed into a data electrical signal with the valid payload rate of 5 Gbps. In the downstream direction, the optical receiving module 414 is coupled to four optical transmitting modules 416 through the demultiplexing module 422 (Demux), and demultiplexes a data electrical signal with the valid payload rate of 10 Gbps into four 2.5 Gbps data electrical signals. The apparatus 400g may also include all the amplifiers of the apparatus 400a.

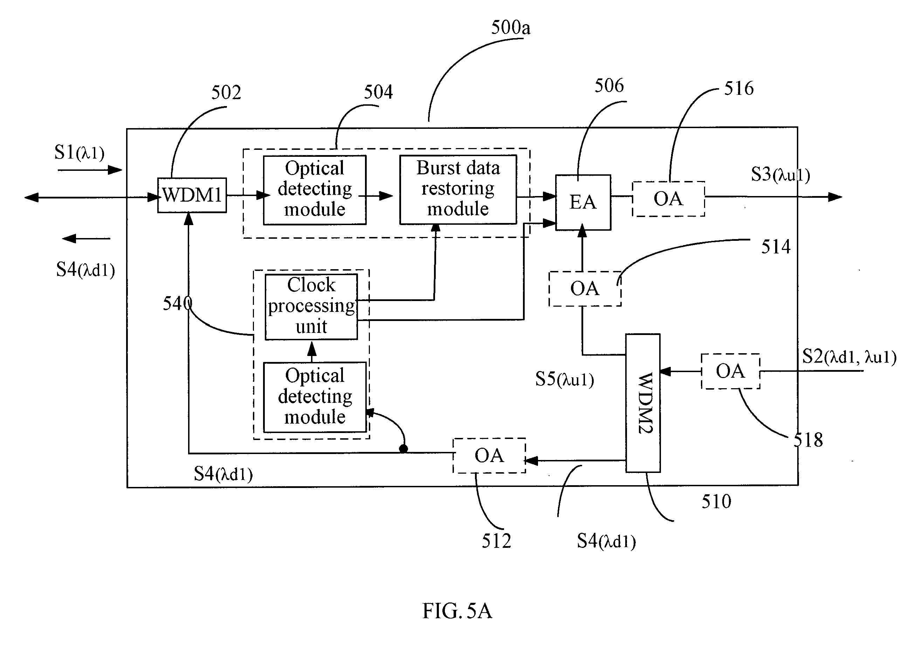

FIG. 5A illustrates an apparatus according to another embodiment of the present invention. Different from the relay apparatus 400a to 400g, the relay apparatus 500a includes a clock extracting module 540 configured to extract a clock from the downstream optical signal and use the extracted clock as a reference clock for receiving and/or transmission in the upstream direction. For example, the clock extracting module 540 couples some optical signals from the downstream optical signal, performs optical detection on the coupled optical signals, and restores a line clock. The clock extracting module 540 may process the restored line clock, for example, performs rate adaptation in the case of inconsistency between the upstream frequency and the downstream frequency. A WDM device 502 of the relay 500a has the same function as the WDM device 402; optical amplifiers 512, 514, and 516 have the same functions as optical amplifiers 412, 414, and 416; and a WDM device 510 has the same functions as the WDM device 410. A burst receiving module 504 implements the functions of the burst receiving module 404, and a modulating module 506 is an external modulator.

In FIG. 5A, an upstream optical signal S1 (λ1) undergoes wavelength division by the WDM 1, and then enters the optical detecting module; the analog electrical signal output by the optical detecting module passes through a TransImpedance Amplifier (TIA) and a Limiting Amplifier (LA) (the TIA and the LA are not shown in FIG. 5A); the burst clock and data restoring module restores an electrical signal; and the restored upstream data is input to the external modulator 506. After a signal S2 (λd1,λu1) is amplified by the optical amplifier 518, the amplified signal S2 (λd1,λu1) is input to the WDM 2. After an upstream seed optical signal S5 (λu1) output by the WDM 2 is amplified by the optical amplifier 514, for example, the SOA, the amplified signal S5 (λu1) is input to the external modulator 506. The external modulator 506 modulates the restored upstream electrical signal to the upstream seed optical signal, and sends an obtained upstream optical signal S3 (λu1) through an optical interface interconnected with the trunk fiber. After the optical signal S4 (λd1) carrying downstream data that is output by the WDM 2 is amplified by the optical amplifier 512, the amplified optical signal S4 (λd1) is input to the WDM 1. It should be noted that, the preceding optical amplifiers 512, 514, 516, and 518 are optional components. Preferably, to reduce the difficulty and complexity of Burst mode Clock and Data Recovery (BCDR), only a small part of light is coupled from the downstream optical signal to extract the reference clock. Specifically, one part of light is coupled from the downstream optical signal output by the optical amplifier 512 and undergoes optical-to-electrical conversion by the optical detecting module of the clock extracting module 540; the electrical signal output by the optical detecting module is input to the clock processing unit of the clock extracting unit 540; the clock extracting unit extracts a reference clock; the reference clock may be provided to the burst data restoring module for burst receiving in the upstream direction and/or be provided to the modulating module for burst transmission in the upstream direction. The light needed by the clock extracting module is not limited to the optical signal output by the optical amplifier 512, and may alternatively be the optical signal output from the WDM device 510.

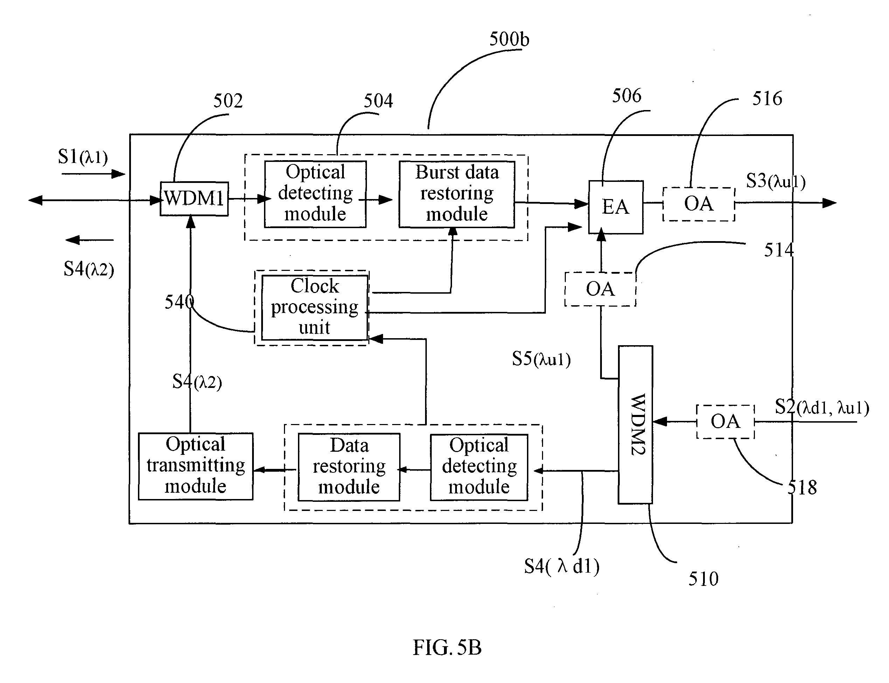

An external modulating module is used in FIG. 5A, with high-rate burst transmission. Alternatively, the SOA capable of direct modulation, with reference to FIG. 4E, may also be used. Because the upstream rate of the NG-PON may reach 10 Gbps and burst transmission is used, the SOA capable of direct modulation is more difficult to implement high-rate burst transmission than an external modulator. In FIG. 5A and FIG. 5B, the optical detecting module may be a photoelectric detector PIN or APD; the burst clock and data restoring module may be a BCDR circuit; and the external modulator 506 may be an Electro-Absorption (EA) modulator or a Lithium Niobate (LiNbO3) modulator.

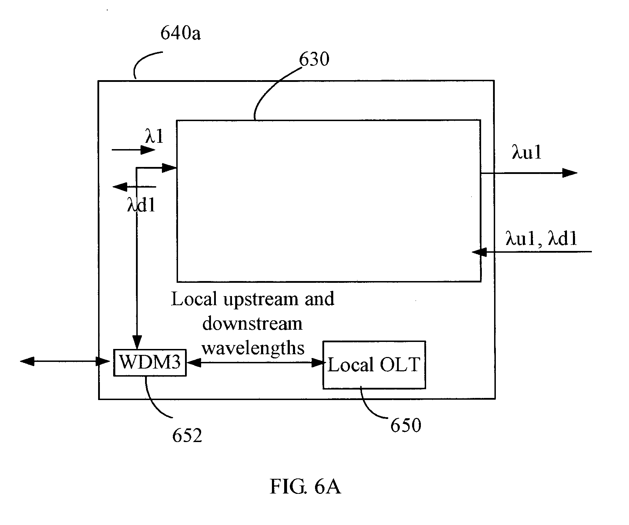

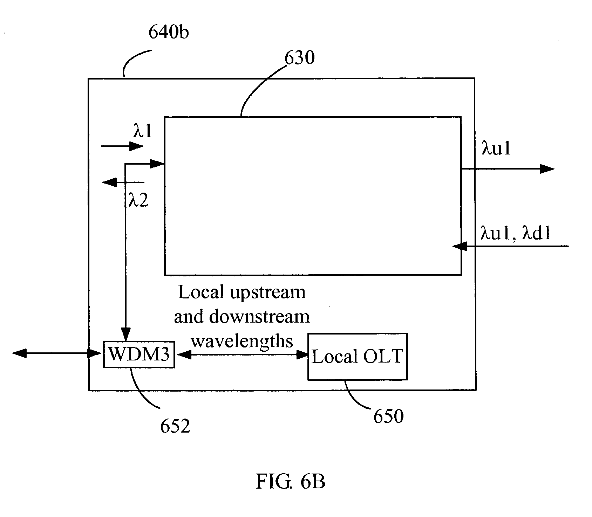

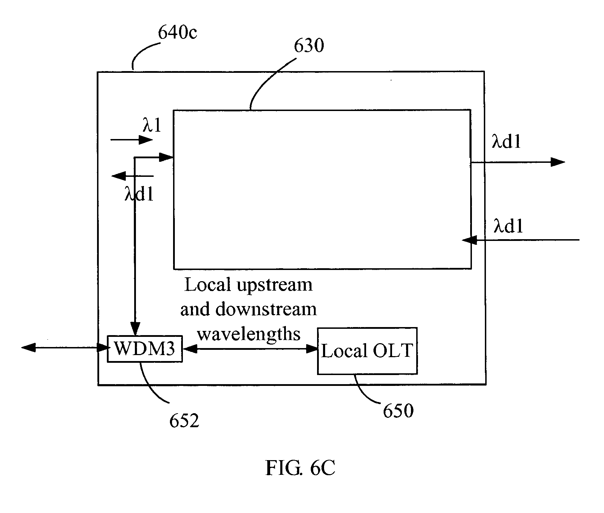

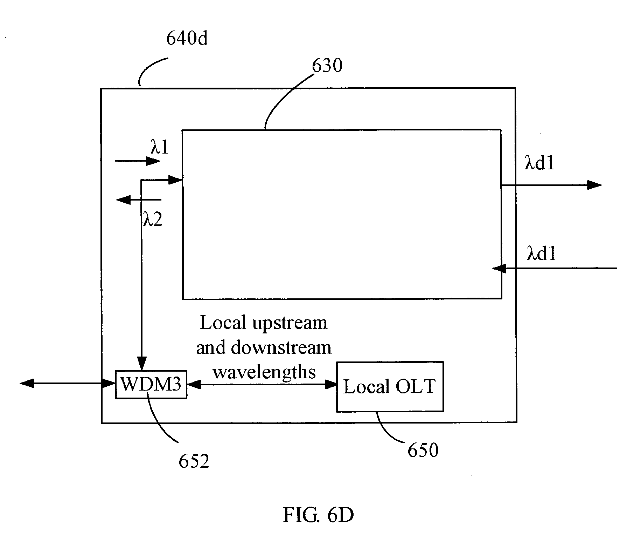

FIG. 6A to FIG. 6D illustrate a local node according to an embodiment of the present invention. In FIG. 6A to FIG. 6D, each of local nodes 640a, 640b, 640c, and 640d includes a relay 630, a WDM device 652, and a local OLT 650. The relay 630 refers to relays 130, 330, 400a to 400g, 500a, and 500b. The WDM device 652 (for example, the WDM 3) multiplexes downstream optical signal output by a Local-OLT 650 (for example, a GPON-OLT) and downstream optical signal output by the relay 630 to the PON, and demultiplexes upstream optical signal of the PON into two signals, with one signal provided to the Local-OLT650 and the other provided to the relay 630.

The following describes the Multiplexing module (Mux) and the Demultiplexing module (Demux) in upstream and downstream data electrical domains with reference to FIG. 1C and FIG. 4G. Taking a GPON Encapsulation Mode (GEM)-based system as an example, 2.48832 Gbps downstream frames of four GPON OLTs on the central node are multiplexed by the Mux into a downstream data frame with the serial bit rate of 10.70923 Gbps over the multiplexing and mapping protocol of the Optical Transport Network (OTN) interface; the downstream data frame is modulated by a transmitting unit of the DS LD Array to an optical signal, and a downstream optical signal is generated. On the local node, the Demux of the relay performs a demultiplexing operation, and re-obtains four standard GPON downstream data frames with the bit rate of 2.48832 Gbps. Each standard GPON downstream data frame with the bit rate of 2.48832 Gbps is modulated to a 1490 nm optical signal through the optical transmitting module, and is then transmitted to the GPON ONU through the WDM 1. In the upstream direction, upstream signals sent from ONUs on four different GPON networks enter the corresponding optical detecting module and burst data restoring module through the WDM 1 to restore the upstream data; the 1.24416 Gpbs upstream burst data is filled into a 2.48832 Gbps data stream in bit filling mode, and four 2.48832 Gbps data streams are multiplexed into one data stream with the serial bit rate of 10.70923 Gbps, which is then modulated to a seed optical signal S5 sent from the central node, and the seed optical signal S5 is sent back to the central node; the central node 180 restores the 1.24416Gbps upstream data frame through demultiplexing and bit filling operations, and sends the upstream data frame to different GPON MAC processing modules.

An optical transmission method is also provided according to embodiments of the present invention. The optical transmission method includes: receiving a first optical signal from a first optical network device (the terminal node in FIG. 1) and a second optical signal from a second optical network device (the central node in FIG. 1); sending a fourth optical signal of the second optical signal to the first optical network device; converting the first optical signal into an electrical signal, and modulating the electrical signal to a fifth optical signal of the second optical signal, and sending a third optical signal obtained through modulation to the second node.

The step of converting the first optical signal into an electrical signal, and modulating the electrical signal to the fifth optical signal of the second optical signal includes: performing photoelectric detection on the first optical signal and restoring burst clock data, and modulating the restored electrical signal to the fifth optical signal of the second optical signal.

The method further includes at least one of the following: after receiving the second optical signal from the second node, performing optical power amplification on the second optical signal; before modulating the fifth optical signal of the second optical signal, performing optical power amplification on the fifth optical signal; before sending the fourth optical signal of the second optical signal to the first node, performing optical power amplification on the fourth optical signal; before sending the third optical signal to the second node, performing optical power amplification on the third optical signal.
The method further includes: extracting a reference clock from the second optical signal, where the reference clock is used for restoring the burst clock data, and/or used for modulation.

An optical network node is also provided according to embodiments of the present invention. The optical network node is connected to the ONT node, and sends a first wavelength optical signal and a second wavelength optical signal to the local node, where the first wavelength optical signal carries data transmitted to the ONT node and the second wavelength optical signal is used as the seed optical signal for the local node to perform modulation. The optical network node sends at least two second wavelength optical signals to the local node in WDM mode.

The preceding GPON-OLT and GPON-ONU may also be the EPON-OLT and EPON-ONU and the local-OLT may be the GPON-OLT or the EPON-OLT.

By using the communication system provided in embodiments of the present invention, the transmission distance may be increased, the quantity of central equipment rooms may be decreased, and the access network and the MAN may be integrated. In addition, the deployed 20 km EPON/GPON can be seamlessly and smoothly evolved to the next generation PON (NG-PON) with a longer distance and a higher rate.

The above descriptions are merely some exemplary embodiments of the present invention.

## Claims

1. An optical communication system, comprising at least one relay (130), wherein:
one end of the relay is coupled to at least one terminal node (110) and the other end is coupled to a central node (180) to implement bi-directional communications between the terminal node and the central node;
the relay is configured to receive a first optical signal from the terminal node (110) and a second optical signal from the central node (180); **characterized in that** the relay (130) is further configured to restore a data electrical signal from the first optical signal, to modulate the data electrical signal to at least some optical signals of the second optical signal, and to send a third optical signal obtained through modulation to the central node (180).

2. The optical communication system of claim 1, wherein:
the second optical signal comprises a fourth optical signal and a fifth optical signal with different wavelengths, wherein the fourth optical signal is configured to carry data transmitted to the terminal node (110) and the fifth optical signal is used as a seed optical signal of the relay (130); and
the relay (130) is further configured to modulate the data electrical signal restored from the first optical signal to the fifth optical signal to obtain the third optical signal.

3. The optical communication system of claim 1, wherein:
the relay (130) is further configured to couple a first part of optical signals from the second optical signal, and to transmit the first part of optical signals to the terminal node (110); and to couple a second part of optical signals from the second optical signal, and to modulate the data electrical signal restored from the first optical signal to the second part of optical signals to obtain the third optical signal.

4. The optical communication system of claim 1, wherein:
the relay (130) is further configured to extract a clock from the second optical signal, wherein the clock is a reference clock used when the relay (130) restores a clock and data from the first optical signal and/or a reference clock used when the relay (130) performs modulation.

5. The optical communication system of claim 1, further comprising a local Optical Line Terminal, OLT (350), and a Wavelength Division Multiplexing, WDM device (352), wherein the relay (330) and the local OLT (350) are connected to the terminal node (310) through the WDM device (352).

6. The optical communication system of claim 5, wherein:
the terminal comprises a first terminal node (310) and a second terminal node (315), wherein:
the central node (380) is configured to perform data interactions with the first terminal node (310) through the relay (330);
the local OLT (350) is configured to perform data interactions with the second terminal node (315); and
the wavelength of an optical signal that a local node (340) receives from the first terminal node (310) is different from the wavelength of an optical signal that the local node (340) receives from the second terminal node (315).

7. The optical communication system of claim 1, wherein:
at least two relays (130) communicate with the central node (180) in Wavelength Division Multiplexing, WDM, mode.

8. A communication apparatus, wherein:
the communications device is configured to receive a first optical signal from a first node (110) and a second optical signal from a second node (180);
**characterized in that** the communications device comprises a receiving module (134) and a modulating module (136), wherein:
the receiving module (134) is configured to restore a data electrical signal from the first optical signal sent from the first node (110), and send the data electrical signal to the modulating module (136); and
the modulating module (136) is configured to modulate the data electrical signal to at least some optical signals of the second optical signal, and send a third optical signal obtained through modulation to the second node (180).

9. The communication apparatus of claim 8, wherein:
the wavelength of the first optical signal sent from the first node (110) is different from the wavelength of the third optical signal.

10. The communication apparatus of claim 9, wherein:
the communications device further comprises a clock extracting module (540) configured to extract a clock from at least some optical signals of the second optical signal; and
the clock is provided to the receiving module (504) as a reference clock for restoring a clock and data and/or provided to the modulating module (506) as a reference clock for modulation.

11. The communication apparatus of any one of claims 8 to 10, wherein the second optical signal comprises a fourth optical signal carrying data of the first node (110) and a fifth optical signal used as a seed optical signal of the communications device, and the fourth optical signal has a wavelength different from the fifth optical signal, wherein:
the fourth optical signal and the fifth optical signal are input through two interfaces of the communications device or through the same interface of the communications device.

12. The communication apparatus of claim 11, further comprising a splitter (420), wherein the splitter (420) is configured to demultiplex an optical signal with an appropriate wavelength from the second optical signal received by the communications device and input the optical signal to the modulating module (406).

13. An optical transmission method, **characterized by** comprising:
receiving a first optical signal from a first node (110) and a second optical signal from a second node (180), wherein the second optical signal comprises a fourth optical signal and a fifth optical signal;
sending the fourth optical signal to the first node (110); and
restoring a data electrical signal from the first optical signal, modulating the restored data electrical signal to the fifth optical signal, and sending a third optical signal obtained through modulation to the second node (180).

14. The optical transmission method of claim 13, further comprising:
extracting a clock from the second optical signal, wherein the clock is used as a reference clock for restoring burst clock data and/or a reference clock for modulation.

15. The optical transmission method of claim 13, wherein the fourth optical signal is configured to carry downstream data from a central node (180), and the fifth optical signal is configured as a seed optical signal; a wavelength of the fourth optical signal is different from that of the fifth optical signal.

## Patentansprüche

1. Optisches Kommunikationssystem mit mindestens einem Relais (130), wobei:
ein Ende des Relais mit mindestens einem Abschlussknoten (110) gekoppelt ist und das andere Ende mit einem zentralen Knoten (180) gekoppelt ist, um eine bidirektionale Kommunikation zwischen dem Abschlussknoten und dem zentralen Knoten durchzuführen;
das Relais konfiguriert ist, ein erstes optisches Signal von dem Abschlussknoten (110) und ein zweites optisches Signal von dem zentralen Knoten (180) zu empfangen; **dadurch gekennzeichnet, dass** das Relais (130) ferner konfiguriert ist, aus dem ersten optischen Signal ein elektrisches Datensignal wiederherzustellen, das elektrische Datensignal auf mindestens einige optische Signale des zweiten optischen Signals zu modulieren und ein durch Modulation erhaltenes drittes optisches Signal an den zentralen Knoten (180) zu senden.

2. Optisches Kommunikationssystem nach Anspruch 1, wobei:
das zweite optische Signal ein viertes optisches Signal und ein fünftes optisches Signal mit unterschiedlichen Wellenlängen aufweist, wobei das vierte optische Signal konfiguriert ist, zu dem Abschlussknoten (110) übertragene Daten zu befördern und das fünfte optische Signal als ein optisches Seed-Signal des Relais (130) verwendet wird; und
das Relais (130) ferner konfiguriert ist, das aus dem ersten optischen Signal wiederhergestellte elektrische Datensignal auf das fünfte optische Signal zu modulieren, um das dritte optische Signal zu erhalten.

3. Optisches Kommunikationssystem nach Anspruch 1, wobei:
das Relais (130) ferner konfiguriert ist, einen ersten Teil der optischen Signale aus dem zweiten optischen Signal zu koppeln, und den ersten Teil der optischen Signale zu dem Abschlussknoten (110) zu übertragen; und einen zweiten Teil der optischen Signale aus dem zweiten optischen Signal zu koppeln, und das aus dem ersten optischen Signal wiederhergestellte elektrische Datensignal auf den zweiten Teil der optischen Signale zu modulieren, um das dritte optische Signal zu erhalten.

4. Optisches Kommunikationssystem nach Anspruch 1, wobei:
das Relais (130) ferner konfiguriert ist, einen Takt aus dem zweiten optischen Signal zu extrahieren, wobei der Takt ein Bezugstakt, der verwendet wird, wenn das Relais (130) einen Takt und Daten aus dem ersten optischen Signal wiederherstellt, und/oder ein Bezugstakt ist, der verwendet wird, wenn das Relais (130) eine Modulation durchführt.

5. Optisches Kommunikationssystem nach Anspruch 1, das ferner einen lokalen optischen Leitungsabschluss, OLT (350), und eine Wellenlängenmultiplex-Vorrichtung, WDM-Vorrichtung (352), aufweist, wobei das Relais (330) und der lokale OLT (350) durch die WDM-Vorrichtung (352) mit dem Abschlussknoten (310) verbunden sind.

6. Optisches Kommunikationssystem nach Anspruch 5, wobei:
der Abschluss einen ersten Abschlussknoten (310) und einen zweiten Abschlussknoten (315) aufweist, wobei:
der zentrale Knoten (380) konfiguriert ist, durch das Relais (330) Dateninteraktionen mit dem ersten Abschlussknoten (310) durchzuführen;
der lokale OLT (350) konfiguriert ist, Dateninteraktionen mit dem zweiten Abschlussknoten (315) durchzuführen; und
sich die Wellenlänge eines optischen Signals, das ein lokaler Knoten (340) von dem ersten Abschlussknoten (310) empfängt, von der Wellenlänge eines optischen Signals unterscheidet, das der lokale Knoten (340) von dem zweiten Abschlussknoten (315) empfängt.

7. Optisches Kommunikationssystem nach Anspruch 1, wobei:
mindestens zwei Relais (130) mit dem zentralen Knoten (180) in einer Wellenlängenmultiplex-Betriebsart, WDM-Betriebsart, kommunizieren.

8. Kommunikationsvorrichtung, wobei:
die Kommunikationsvorrichtung konfiguriert ist, ein erstes optisches Signal von einem ersten Knoten (110) und ein zweites optisches Signal von einem zweiten Knoten (180) zu empfangen;
**dadurch gekennzeichnet, dass** die Kommunikationsvorrichtung ein Empfangsmodul (134) und ein Modulationsmodul (136) aufweist, wobei:
das Empfangsmodul (134) konfiguriert ist, ein elektrisches Datensignal aus dem ersten optischen Signal wiederherzustellen, das von dem ersten Knoten (110) gesendet wird, und das elektrische Datensignal an das Modulationsmodul (136) zu senden; und
das Modulationsmodul (136) konfiguriert ist, das elektrische Datensignal auf mindestens einige optische Signale des zweiten optischen Signals zu modulieren, und ein durch Modulation erhaltenes drittes optisches Signal an den zweiten Knoten (180) zu senden.

9. Kommunikationsvorrichtung nach Anspruch 8, wobei:
sich die Wellenlänge des von dem ersten Knoten (110) gesendeten ersten optischen Signals von der Wellenlänge des dritten optischen Signals unterscheidet.

10. Kommunikationsvorrichtung nach Anspruch 9, wobei:
die Kommunikationsvorrichtung ferner ein Taktextraktionsmodul (540) aufweist, das konfiguriert ist, aus mindestens einigen optischen Signalen des zweiten optischen Signals einen Takt zu extrahieren; und
der Takt an das Empfangsmodul (504) als ein Bezugstakt zu dem Wiederherstellen eines Takts und von Daten geliefert wird und/oder an das Modulationsmodul (506) als ein Bezugstakt zur Modulation geliefert wird.

11. Kommunikationsvorrichtung nach einem der Ansprüche 8 bis 10, wobei das zweite optische Signal ein viertes optisches Signal, das Daten des ersten Knotens (110) befördert, und ein fünftes optisches Signal aufweist, das als ein optisches Seed-Signal der Kommunikationsvorrichtung verwendet wird, und das vierte optische Signal eine Wellenlänge aufweist, die sich von dem fünften optischen Signal unterscheidet, wobei:
das vierte optische Signal und das fünfte optische Signal durch zwei Schnittstellen der Kommunikationsvorrichtung oder durch dieselbe Schnittstelle der Kommunikationsvorrichtung eingegeben werden.

12. Kommunikationsvorrichtung nach Anspruch 11, die ferner einen Splitter (420) aufweist, wobei der Splitter (420) konfiguriert ist, ein optisches Signal mit einer geeigneten Wellenlänge aus dem zweiten optischen Signal zu demultiplexen, das durch die Kommunikationsvorrichtung empfangen wird, und das optische Signal in das Modulationsmodul (406) einzugeben.

13. Optisches Übertragungsverfahren, **dadurch gekennzeichnet, dass** es die folgenden Schritte aufweist:
Empfangen eines ersten optischen Signals von einem ersten Knoten (110) und eines zweiten optischen Signals von einem zweiten Knoten (180), wobei das zweite optische Signal ein viertes optisches Signal und ein fünftes optisches Signal aufweist; Senden des vierten optischen Signals an den ersten Knoten (110); und
Wiederherstellen eines elektrischen Datensignals aus dem ersten optischen Signal, Modulieren des wiederhergestellten elektrischen Datensignals auf das fünfte optische Signal, und Senden eines durch Modulation erhaltenen dritten optischen Signals an den zweiten Knoten (180).

14. Optisches Übertragungsverfahren nach Anspruch 13, das ferner aufweist:
Extrahieren eines Takts aus dem zweiten optischen Signal, wobei der Takt als ein Bezugstakt zu dem Wiederherstellen eines Takt-Daten-Bündels und/oder ein Bezugstakt zur Modulation verwendet wird.

15. Optisches Übertragungsverfahren nach Anspruch 13, wobei das vierte optische Signal konfiguriert ist, Abwärtsstreckendaten von einem zentralen Knoten (180) zu befördern, und das fünfte optische Signal als ein optisches Seed-Signal konfiguriert ist; sich eine Wellenlänge des vierten optischen Signals von der des fünften optischen Signals unterscheidet.

## Revendications

1. Système de communication optique, comprenant au moins un relais (130), dans lequel :
une extrémité du relais est couplée à au moins un noeud terminal (110) et l'autre extrémité est couplée à un noeud central (180) pour mettre en oeuvre des communications bidirectionnelles entre le noeud terminal et le noeud central ;
le relais est configuré pour recevoir un premier signal optique en provenance du noeud terminal (110) et un deuxième signal optique en provenance du noeud central (180) ; **caractérisé en ce que** le relais (130) est en outre configuré pour restaurer un signal électrique de données à partir du premier signal optique, pour moduler avec le signal électrique de données au moins certains signaux optiques du deuxième signal optique, et pour envoyer un troisième signal optique obtenu par modulation au noeud central (180).

2. Système de communication optique selon la revendication 1, dans lequel :
le deuxième signal optique comprend un quatrième signal optique et un cinquième signal optique avec des longueurs d'onde différentes, le quatrième signal optique étant configuré pour transporter des données transmises au noeud terminal (110) et le cinquième signal optique étant utilisé comme signal optique germe du relais (130) ; et
le relais (130) est en outre configuré pour moduler avec le signal électrique de données restauré à partir du premier signal optique le cinquième signal optique pour obtenir le troisième signal optique.

3. Système de communication optique selon la revendication 1, dans lequel :
le relais (130) est en outre configuré pour coupler une première partie de signaux optiques issue du deuxième signal optique, et pour transmettre la première partie de signaux optiques au noeud terminal (110) ; et pour coupler une deuxième partie de signaux optiques issue du deuxième signal optique, et pour moduler avec le signal électrique de données restauré à partir du premier signal optique la deuxième partie de signaux optiques pour obtenir le troisième signal optique.

4. Système de communication optique selon la revendication 1, dans lequel :
le relais (130) est en outre configuré pour extraire une horloge du deuxième signal optique, l'horloge étant une horloge de référence utilisée quand le relais (130) restaure une horloge et des données à partir du premier signal optique et/ou une horloge de référence utilisée quand le relais (130) effectue une modulation.

5. Système de communication optique selon la revendication 1, comprenant en outre un terminal de ligne optique, OLT, local (350) et un dispositif de multiplexage par répartition en longueur d'onde, WDM (352), le relais (330) et l'OLT local (350) étant reliés au noeud terminal (310) par l'intermédiaire du dispositif WDM (352).

6. Système de communication optique selon la revendication 5, dans lequel :
le terminal comprend un premier noeud terminal (310) et un deuxième noeud terminal (315), dans lequel :
le noeud central (380) est configuré pour effectuer des interactions de données avec le premier noeud terminal (310) par l'intermédiaire du relais (330) ;
l'OLT local (350) est configuré pour effectuer des interactions de données avec le deuxième noeud terminal (315) ; et
la longueur d'onde d'un signal optique qu'un noeud local (340) reçoit en provenance du premier noeud terminal (310) est différente de la longueur d'onde d'un signal optique que le noeud local (340) reçoit en provenance du deuxième noeud terminal (315).

7. Système de communication optique selon la revendication 1, dans lequel :
au moins deux relais (130) communiquent avec le noeud central (180) en mode multiplexage par répartition en longueur d'onde, WDM.

8. Appareil de communication, dans lequel :
le dispositif de communication est configuré pour recevoir un premier signal optique en provenance d'un premier noeud (110) et un deuxième signal optique en provenance d'un deuxième noeud (180) ;
**caractérisé en ce que** le dispositif de communication comprend un module de réception (134) et un module de modulation (136), dans lequel :
le module de réception (134) est configuré pour restaurer un signal électrique de données à partir du premier signal optique envoyé depuis le premier noeud (110), et envoyer le signal électrique de données au module de modulation (136) ; et
le module de modulation (136) est configuré pour moduler avec le signal électrique de données au moins certains signaux optiques du deuxième signal optique, et envoyer un troisième signal optique obtenu par modulation au deuxième noeud (180).

9. Appareil de communication selon la revendication 8, dans lequel :
la longueur d'onde du premier signal optique envoyé depuis le premier noeud (110) est différente de la longueur d'onde du troisième signal optique.

10. Appareil de communication selon la revendication 9, dans lequel :
le dispositif de communication comprend en outre un module d'extraction d'horloge (540) configuré pour extraire une horloge à partir d'au moins certains signaux optiques du deuxième signal optique ; et
l'horloge est transmise au module de réception (504) en tant qu'horloge de référence pour restaurer une horloge et des données et/ou transmise au module de modulation (506) en tant qu'horloge de référence pour la modulation.

11. Appareil de communication selon l'une quelconque des revendications 8 à 10, dans lequel le deuxième signal optique comprend un quatrième signal optique transportant des données du premier noeud (110) et un cinquième signal optique utilisé comme signal optique germe du dispositif de communication, et le quatrième signal optique a une longueur d'onde différente de celle du cinquième signal optique, dans lequel :
le quatrième signal optique et le cinquième signal optique sont introduits par deux interfaces du dispositif de communication ou par la même interface du dispositif de communication.

12. Appareil de communication selon la revendication 11, comprenant en outre un diviseur (420), le diviseur (420) étant configuré pour démultiplexer un signal optique avec une longueur d'onde appropriée à partir du deuxième signal optique reçu par le dispositif de communication et introduire le signal optique dans le module de modulation (406).

13. Procédé de transmission optique, **caractérisé en ce qu'**il comprend :
la réception d'un premier signal optique en provenance d'un premier noeud (110) et d'un deuxième signal optique en provenance d'un deuxième noeud (180), le deuxième signal optique comprenant un quatrième signal optique et un cinquième signal optique ;
l'envoi du quatrième signal optique au premier noeud (110) ; et
la restauration d'un signal électrique de données à partir du premier signal optique, la modulation avec le signal électrique de données restauré du cinquième signal optique, et l'envoi d'un troisième signal optique obtenu par modulation au deuxième noeud (180).

14. Procédé de transmission optique selon la revendication 13, comprenant en outre :
l'extraction d'une horloge à partir du deuxième signal optique, l'horloge étant utilisée comme horloge de référence pour restaurer des données d'horloge par rafales et/ou comme horloge de référence pour la modulation.

15. Procédé de transmission optique selon la revendication 13, dans lequel le quatrième signal optique est configuré pour transporter en aval des données en provenance d'un noeud central (180), et le cinquième signal optique est configuré comme un signal optique germe, une longueur d'onde du quatrième signal optique étant différente de celle du cinquième signal optique.
